# EUROPEAN PATENT SPECIFICATION

(11) **EP 2 365 490 B1**
(45) Date of publication and mention of the grant of the patent: **18.06.2014**
(21) Application number: 11000472.8
(22) Date of filing: 21.01.2011
(51) Int. Cl.: G21C 3/352, G21C 3/356

(54) **Split spring anti-fretting fuel rod support structure**
Kernbrennstababstützelement mit geteilter Feder zur reibungsverschleißfreien Halterung von Kernbrennstäben
Dispositif de support de barreau de combustible anti-usure à ressort fractionné

(30) Priority: 16.02.2010 US 706166
(43) Date of publication of application: 14.09.2011
(73) Proprietor: Westinghouse Electric Company Llc, Cranberry Township, PA 16066 (US)
(72) Inventor: Evans, Paul Marcus, Chapin South Carolina 29039 (US); Broders, Richard P., Granby Conneticut 06035 (US); Marzean, Michael Anthony, Columbia South Carolina 29209 (US); Winegardner, Michael, Lexington South Carolina 29072 (US); Reparaz, Adolfo, Columbia South Carolina 29209 (US)
(74) Representative: Gallo, Wolfgang

(56) References cited:
- DE-A1- 10 002 824
- US-A1- 2004 196 954
- US-A1- 2008 232 537

## Description

### BACKGROUND OF THE INVENTION

### 1. Field of the Invention

The present invention relates generally to nuclear reactors, and more particularly, to nuclear reactors having fuel assemblies that employ grids.

### 2. Description of the Related Art

In most water cooled nuclear reactors, the reactor core is comprised of a large number of elongated fuel assemblies. In pressurized water nuclear reactors (PWR), these fuel assemblies typically include a plurality of fuel rods held in an organized array by a plurality of grids spaced axially along the fuel assembly length and attached to a plurality of elongated thimble tubes of the fuel assembly. The thimble tubes typically receive control rods or instrumentation therein. Top and bottom nozzles are on opposite ends of the fuel assembly and are secured to the ends of the thimble tubes that extend slightly above and below the ends of the fuel rods.

The grids, as is known in the relevant art, are used to precisely maintain the spacing and support between the fuel rods in the reactor core, provide lateral support for the fuel rods and induce mixing of the coolant. One type of conventional grid design includes a plurality of interleaved straps that together form an egg-crate configuration having a plurality of roughly square cells which individually accept the fuel rods therein. Depending upon the configuration of the thimble tubes, the thimble tubes can either be received in the cells that are sized the same as those that receive fuel rods therein, or in relatively larger thimble cells defined in the interleaved straps. The interleaved straps provide attachment points to the thimble tubes, thus enabling their positioning at spaced locations along the length of the fuel assembly.

Conventionally, the interleaved straps are configured such that the cells through which the fuel rods pass each include one or more relatively compliant springs and a plurality of relatively rigid dimples. The springs and dimples may be formed in the metal of the interleaved straps and protrude outwardly therefrom into the cells through which the fuel rods pass. The springs and dimples of each fuel rod cell then contact the corresponding fuel rod extending through the cell. Outer straps of the grid are attached together and peripherally enclose the inner straps of the grid to impart strength and rigidity to the grid and to define individual fuel rod cells around the perimeter of the grid. The inner straps are typically welded or braised at each intersection and the inner straps are also welded or braised to the peripheral or outer straps defining the outer perimeter of the assembly.

Conventionally, at the individual cell level, the fuel rod support is normally provided by the combination of rigid support dimples and flexible springs as mentioned above. There are many variations to the spring-dimple support geometry that have been used, including diagonal springs, "I" shaped springs, cantilevered springs, horizontal and vertical dimples, etc. The number of springs per cell also varies. The typical arrangement is two springs and four dimples per cell. The geometry of the dimples and springs needs to be carefully determined to provide adequate rod support through the life of the assembly.

During irradiation, the initial spring force relaxes more or less rapidly, depending on the spring material and irradiation environment. The cladding diameter also changes as a result of the very high coolant pressure and operating temperatures and the pellets inside the rod also change their diameter by densification and swelling. The outside cladding diameter also increases, due to the formation of an oxide layer. As a result of these dimensional and material property changes, maintaining adequate rod support through the life of a fuel assembly is very challenging.

Under the effect of axial flow and cross flow induced by thermal and pressure gradients within the reactor and other flow disturbances, such as standing waves and eddies, the fuel rods, which are slender bodies, are continuously vibrating with relatively small amplitudes. If the rod is not properly supported, this very small vibration amplitude may lead to relative motion between the support points and the cladding. If the pressure exerted by the sliding rod on the relatively small dimple and grid support surfaces is high enough, a small corrosion layer on the surface of the cladding can be removed by abrasion, exposing the base metal to the coolant. As a new corrosion layer is formed on the exposed fresh cladding surface, it is also removed by abrasion until ultimately the wall of the rod is perforated. This phenomenon is known as grid-to-rod fretting and in 2006 it was the leading cause of fuel failures in PWR reactors.

Support grids also provide another important function in the assembly, that of coolant mixing to decrease the maximum cladding temperature. Since heat generated by each rod is not uniform, there are thermal gradients in the coolant. One important parameter in the design of the fuel assembly is to maintain efficient heat transfer from the rods to the coolant. The higher the amount of heat removed per unit time, the higher the power being generated. At high enough coolant temperatures, the rate of heat that can be removed per unit of cladding area in a given time decreases abruptly in a significant way. This phenomenon is known as deviation from nucleate boiling or DNB. If within the parameters of reactor operation, the coolant temperature would reach the point of DNB, the cladding surface temperature would increase rapidly in order to evacuate the heat generated inside the rod and rapid cladding oxidation would lead to cladding failure. It is clear that DNB needs to be avoided to prevent fuel failures. Since DNB, if it occurs, takes place at the point where the coolant is at its maximum temperature, it follows that decreasing the maximum coolant temperature by coolant mixing within the assembly permits the generation of larger amounts of power without reaching DNB conditions. Normally, the improved mixing is achieved by using mixing vanes in the down flow side of the grid structure. The effectiveness of mixing is dependent upon the shape, size, and location of the mixing vanes relative to the fuel rod.

Other important functions of the grid include the ability to sustain handling and normal operation at anticipated accident loads without losing function and to avoid "hot spots" on the fuel rods due to the formation of steam pockets between the fuel rods and the support points, which may result when not enough coolant is locally available to evacuate the heat generated in the rod. Steam pockets cause overheating of the fuel rod to the point of failure by rapid localized corrosion of the cladding.

Maintaining a substantially balanced cooling flow through the fuel assemblies across the core is a desirable objective to maintain substantially uniform heat transfer. Any changes in fuel assembly design can alter the pressure drop and effect the relative balance in flow resistance through the core among the various types of fuel assemblies. Changes in grid design that reduce pressure drop are desirable because such changes enable a fuel assembly designer to introduce other improvements that will restore the pressure drop equilibrium among fuel assemblies.

As previously mentioned, grid strap dimples and springs protrude into a grid cell location to position a nuclear fuel rod in the lattice array. The taller the dimple and the more it protrudes into the grid cell, the stiffer the dimple. This increased stiffness can result in the fuel rod being scratched or galled during rod loading. A stiffer dimple also increases the risk of dimple-to-rod fretting due to higher fuel rod contact stresses. Therefore, the dimple designer needs to provide adequate stiffness to position the fuel rod, but minimize stiffness to reduce scratches, galling and the potential for fretting.

It is thus desired to provide an improved grid that exhibits effective heat transfer and improved fuel rod support with less potential for scratching or galling the fuel rods when they are loaded into the assembly. It is a further object of this invention to provide such an improved grid that has a number of manufacturing advantages.

### SUMMARY OF THE INVENTION

The foregoing objectives are achieved by an improved nuclear fuel assembly grid having a first plurality of spaced, parallel, elongated straps and a second plurality of spaced, parallel, elongated straps positioned orthogonal to the first plurality of spaced, parallel, elongated straps. The first and second plurality of spaced, parallel, elongated straps are aligned in a regular lattice pattern so that the intersection of each set of four adjacent straps defines a cell, some of which support fuel rods, with an extent of each of the first and second straps that border each cell forming a wall of the cell. Preferably, the straps are interleaved at their intersections in an egg-crate pattern. A bordering strap surrounds the exterior perimeter of the first and second plurality of spaced, parallel, elongated straps and is affixed at the intersections with the interior strap. At least one wall of the cells that support fuel rods has a vertically elongated spring that extends into the cell. The vertically elongated spring has a vertical slit that separates the most extended portion of the spring into two vertically oriented ligaments with the most extended portion of the ligaments being rounded in two directions to provide two, co-planar, point contacts of support for a fuel rods.

In one embodiment, each wall of the cell that supports the fuel rods includes the vertically elongated spring at the same elevation. The springs form eight co-planar point contacts of support for the fuel rods.

In still another embodiment, the elongated spring is formed separate from the strap from which it extends. The spring is attached to the wall at an upper and lower vertical end portion of the spring.

In a third embodiment, the vertically elongated spring is formed separate from the strap from which it extends. The strap has an upper and lower opening in the wall through which the spring is attached to a second spring extending in an opposite direction into an adjacent cell that supports another fuel rod. Preferably, the upper and lower openings in the wall are either vertical slots or notches in the top and bottom of the strap.

Preferably, each of the ligaments has a leg that laterally extends towards each other with each leg stopping short of contact with each other. The opposing ends of the legs extends slightly further into the cell so that the point of contact with the fuel rod passing through the corresponding cell is made on the legs.

In still another embodiment, a lower portion of the spring that extends into the cell is connected to the strap at approximately mid height of the wall. The portion of the spring that extends below the mid height of the wall then extends in the opposite direction into an adjacent cell. Preferably, the vertical slit on the spring does not extend to the top or bottom of the spring. In still one further embodiment, an opposing wall of the cell that supports fuel rods, in which a spring extends, has at least one dimple that extends into the cell to oppose the spring.

### BRIEF DESCRIPTION OF THE DRAWINGS

A further understanding of the invention can be gained from the following description of the preferred embodiment when read in conjunction with accompanying drawings in which:
Figure 1 is a top plan view of a pressurized water reactor conventional fuel assembly grid;
Figure 2 is an elevational view, partially in section, of a fuel assembly which employs the fuel rod grid of the present invention; the assembly being illustrated in vertically foreshortened form with parts broken away for clarity;
Figure 3 is a perspective view of the split spring of this invention resistance welded to a wall of a fuel assembly grid cell that supports fuel rods;
Figure 4 is a variation on the perspective view shown in Figure 3 with a spring welded at upper and lower end portions through notches in the upper and lower ends of the wall to a second spring extending in the opposite direction into an adjacent cell;
Figure 5 is a variation on the perspective view shown in Figure 4 where the spring is welded at upper and lower end portions to a second spring extending into an adjacent cell through upper and lower slots in the cell wall;
Figure 6 is a perspective view of a fuel rod support cell employing the springs of this invention on all four walls with a fuel rod shown supported therebetween;
Figure 7 is a plan view of the fuel rod support cell of Figure 6;
Figure 8 is side elevational view of a portion of a fuel rod in contact with an extended portion of the spring of this invention;
Figure 9 is a perspective view of another embodiment of the spring of this invention;
Figure 10 is a perspective view of a fuel rod support cell employing springs of a an additional embodiment of this invention shown supporting a section of a fuel rod;
Figure 11 is a plan view of Figure 10;
Figure 12 is a front view of one wall of the cell illustrated in Figure 10;
Figure 13 is a side view of the cell wall illustrated in Figure 12; and
Figure 14 is a perspective view of fuel rod support cell wall in accordance with a further embodiment of this invention.

### DESCRIPTION OF THE PREFERRED EMBODIMENT

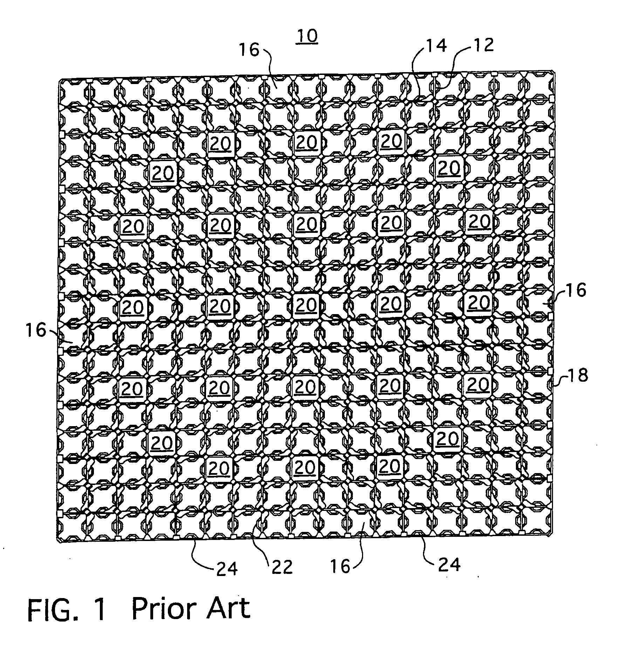

Nuclear fuel spacer grids are used in fuel assemblies to position nuclear fuel rods. Accurately positioning nuclear fuel rods is critical to assure proper nuclear and thermal hydraulic performance of a nuclear core of a reactor. Many conventional spacer grids are composed of straight grid straps that are interleaved together to form an egg-crate lattice having a plurality of roughly square cells many of which support fuel rods. An example of such a conventional fuel grid 10 can be found in Figure 1. A spaced, parallel array of grid straps 12 of equal length are positioned orthogonally to a second plurality of the spaced, parallel grid straps 14 of equal length and are encircled by a border strap 18, with each of the straps being welded at their intersections. The cells 16 support the fuel rods while the cells 20 support guide tubes and an instrumentation tube. Because the fuel rods must maintain a spacing or pitch between each other, these straight grid straps 12 and 14 at the locations that border the cells 16 that support fuel rods have springs 22 and/or dimples 24 that are stamped in the sides of the straps 12 and 14 to protrude into the cell 16 to contact the fuel rods and hold them firmly in position. The stamped features on the grid straps 12 and 14, *i.e.,* the springs 22 and the dimples 24, require careful design and precise manufacturing to assure adequate force is maintained to secure the fuel rods when considered in combination with the other grids in the tandem array of grids along the fuel assembly.

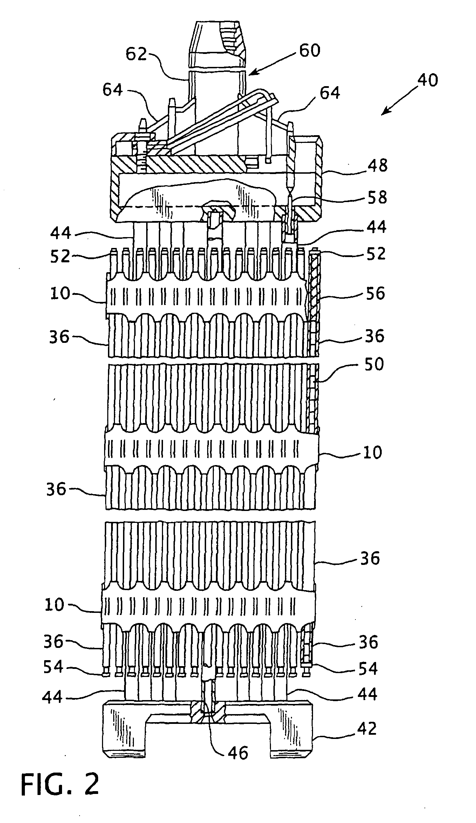

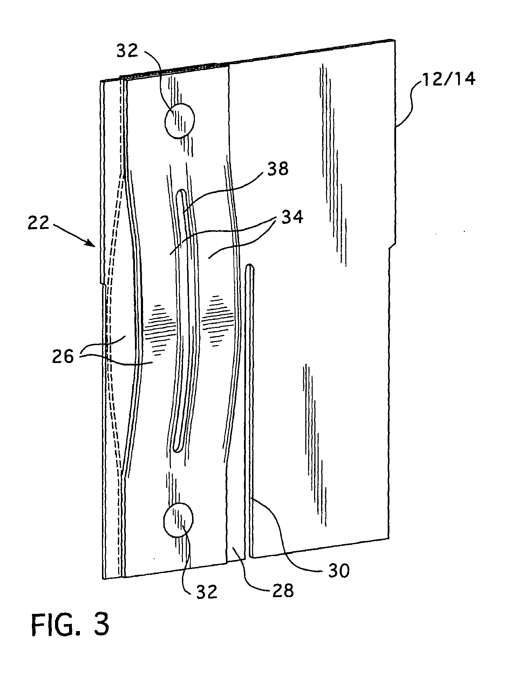

Referring to Figure 2, there is shown an elevational view of a fuel assembly represented in vertically foreshortened form which is generally designated by reference character 40. The fuel assembly 40 is of the type used in a pressurized water reactor and basically includes a lower end structure or bottom nozzle 42 for supporting the fuel assembly on a lower core plate (not shown) in the reactor core region and a number of longitudinally extending guide thimbles or tubes 44 and an instrumentation thimble 46 which project upwardly from the bottom nozzle 42. The fuel assembly 40 further includes a plurality of transverse grids 10, constructed in accordance with this invention, and partially shown in more detail in Figures 3-14. The grids 10 are axially spaced along and supported by the guide thimbles 44. Fuel assembly 40 also includes a plurality of elongated fuel rods 36 transversely spaced and supported in an organized array by the grids 10. Also, the fuel assembly 40 has an instrumentation tube 46 located in the center thereof and an upper end structure or nozzle 48 attached to the upper ends of the guide thimbles 44. With such an arrangement of parts, the fuel assembly 40 forms an integral unit capable of being conveniently handled without damaging the assembly of parts.

As mentioned above, the fuel rods 36 and the array thereof in the fuel assembly 40 are held in spaced relationship with one another by the grids 10 spaced along the fuel assembly length. Each fuel rod 36 includes nuclear fuel pellets 50 and the opposite ends of the rods 36 are enclosed by upper and lower end plugs 52 and 54, to hermetically seal the rods. Commonly, a plenum spring 56 is disposed between the upper end plug 52 and the pellets 50 to maintain the pellets in a tight, stacked relationship within the rod 36. The fuel pellets 50 composed of fissile material are responsible for creating the reactive power of the PWR. A liquid moderator/coolant, such as water or water containing boron, is pumped upwardly through the fuel assemblies of the core in order to extract heat generated therein for the production of useful work.

To control the fission process, a number of control rods 58 are reciprocally movable in the guide thimbles 44 located at predetermined positions in the fuel assembly 40. Specifically, the top nozzle 48 has associated therewith a rod cluster control mechanism 60, having an internally threaded cylindrical hub member 62 with a plurality of radially extending flukes or arms 64 such that the control mechanism 60 is operable to move the controls rods 58 vertically in the guide thimbles 44 to thereby control the fission process in the fuel assembly 40, all in a well known manner.

As previously mentioned, the design of the contact area between the side walls of the grid cells that support the fuel rods and the cladding surface of the rods is critical to assure that there is enough force to secure the rods against harmful vibrations without scarring the cladding. Traditionally, support of the fuel rods within the spacer grid is accomplished using a configuration of two vertically spaced dimples and one opposing spring in each of two directions, thus resulting in a six-point contact support structure. Despite many variations on this concept, it has proven difficult to find a design that is consistently immune to fretting induced rod failures. Recent flow loop testing has indicated that co-planar supports (*i.e*., supports at the same axial elevation within a given grid cell) will provide a more fretting resistant rod support system. Additionally, it has been theorized that more than six contact points in a given cell will provide additional margin to fretting. This invention, various embodiments of which are illustrated in Figures 3-14, provides eight points of contact in a grid cell while maintaining a co-planar rod support system. In one series of embodiments, the base strap provides the strength of the grid structure for seismic/LOCA (loss of coolant accident) purposes, while the attached springs provide the rod support structure. In another series of embodiments, the split spring of this invention is an integral part of the base strap. Thus, this invention may be subdivided into two main categories split springs which are integral to the base strap and split springs which are separate but attached to or captured by the base strap. Each of the embodiments of this invention utilizes the same basic split spring configuration.

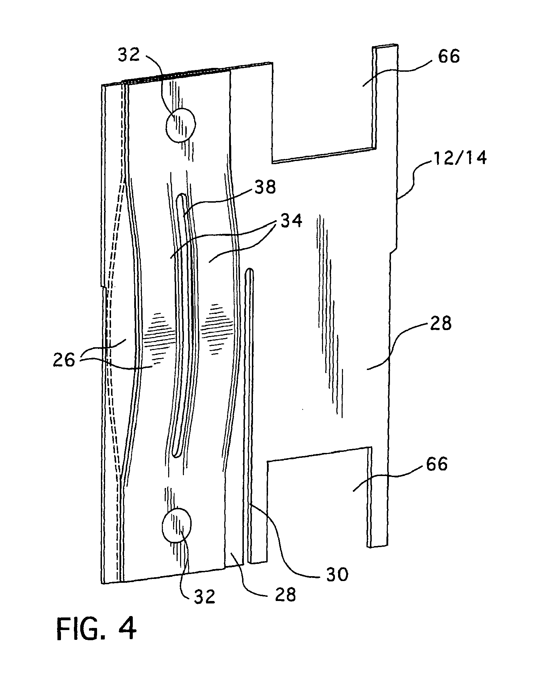

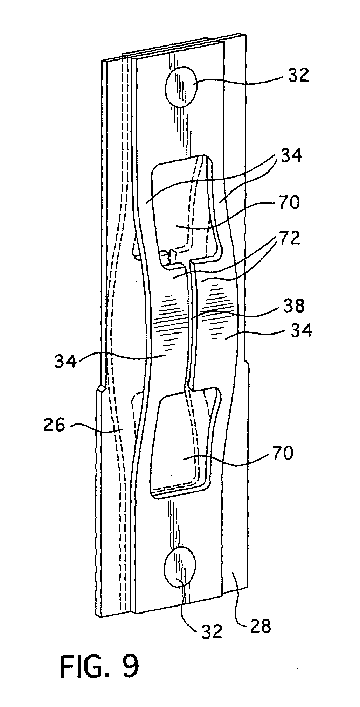

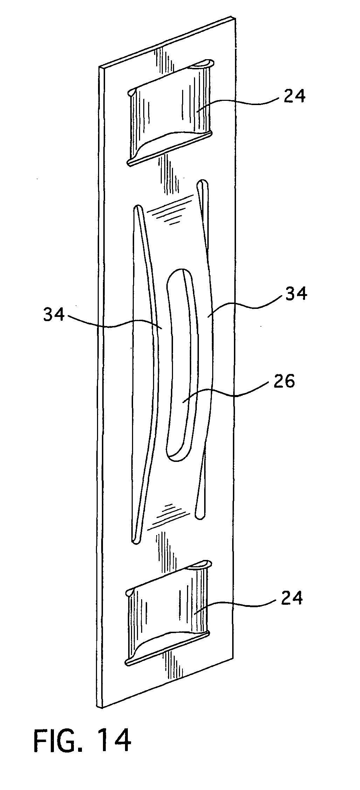

The concepts of this invention employ two main components, namely, the base strap 12/14 which forms the walls 28 of the grid cells and the split springs 26 which may either be separate, but attached or integral to the base strap 12-14. Each of the embodiments of this invention utilizes the same basic split spring 26 as shown in Figure 3, though there are some variations on the design of the spring that will be described with regard to Figures 9 and 14. Figure 3 shows a solid base strap 12/14 except for the slits 30 that are employed to interleave the orthogonal straps 12 and 14 in an egg-crate configuration. In the embodiment shown in Figure 3, the springs on the walls of the cells that support fuel rods are resistance welded to the cell walls 28 at upper and lower portions 32 of the springs 26. A central elongated vertical slit 38 in the spring 26 extends from a point spaced below the upper weld 32 to a location spaced above the lower weld 32; the vertical slit extending substantially over the central portion of the spring that projects into the fuel rod support cell. The central vertical slit 38 thus divides the central vertical portion of the spring into two ligaments 34 which are rounded in both a horizontal and vertical direction to provide two point support contacts per spring for the fuel rod. This configuration provides for high crush strength since the entire base strap can be used to carry the seismic/LOCA loads. Figure 4 illustrates another embodiment of this invention in which the base strap is provided with notches 66 cut out in the top and bottom of the strap 12/14 so that back to back spring features 26 on either side of the strap 12/14 can be welded together at 32 so they are captured between the vertical extent of the wall 28 between the notches 66. This embodiment provides a decrease in pressure drop and a softer spring structure since the welded spring structure can elongate during loading.

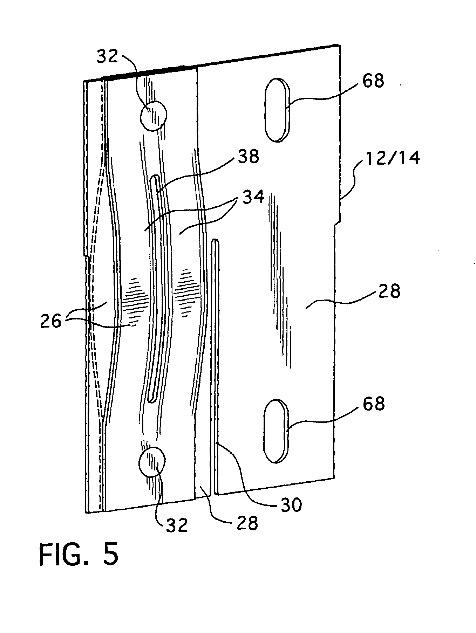

Figure 5 illustrates another base strap configuration with elongated slots 68 cut in the base strap 12/14. The slots 68 provide for the spring features 26 to be welded together at 32, which also provides for a softer spring structure, similar to that shown in Figure 4. The embodiment illustrated in Figure 5 is desirable because it provides a location to attach mixing vanes and also provides for a higher crush strength than the configuration illustrated in Figure 4. It should be appreciated that though the springs are shown resistance welded to either an opposing spring in an adjacent cell as illustrated in Figure 5 or to the base strap as illustrated in Figure 4 other forms of attachment could be used, such as a mechanical connection, for example, a rivet or bolt.

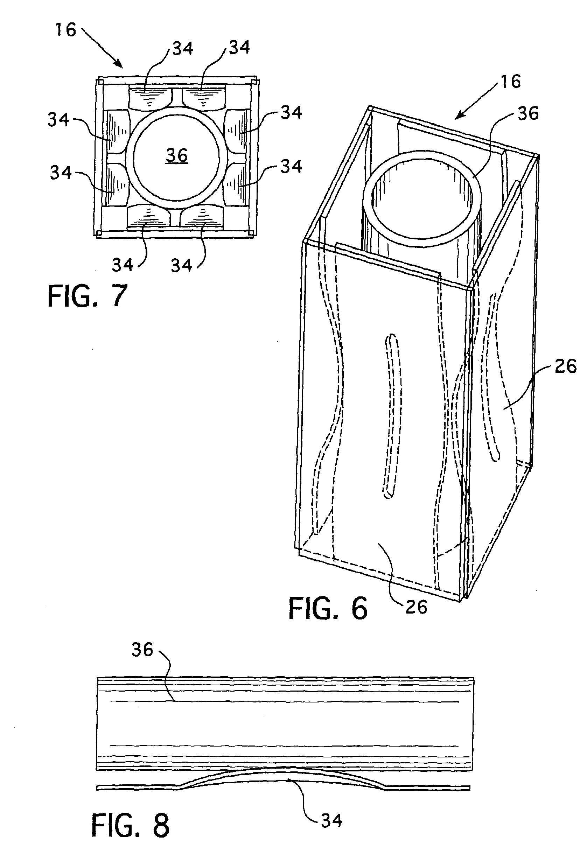

Figure 6 shows a fuel rod support cell 16 with split springs 26 on all four walls providing a coplanar eight point contact support for the fuel rod 36 supported therein. However, it should be appreciated that though the eight point support illustrated in Figure 6 is preferable, the split springs 26 may be employed in combination with dimples as will be described with regard to Figure 14 and that a combination thereof may also be employed. For example, the split springs may be employed on two opposing walls and a split spring and an opposing dimple or dimples may be employed on the other two walls, though the eight point coplanar support illustrated in Figure 6 is preferable. Figure 7 shows a plan view of the eight point support illustrated in Figure 6 and Figure 8 provides a side view of the point contact that the spring ligaments 34 make with the fuel rods 36 due to the ligaments' surface being rounded in two directions.

Figure 9 illustrates another embodiment of the spring 26 in which the central slits 38 are enlarged above and below the central region of the ligaments 34 to form window cutouts 70. The central slit 38 continues through the central portion of the spring to define two laterally extending legs 72 that oppose each other and form the furthest extent of the spring 26 from the wall 28 to provide the two fuel rod contact locations. The laterally extending legs 72 enable the ligaments 34 to rotate to provide for a softer spring. It should be appreciated that the embodiments illustrated in Figures 3-5 and 9 are similar in that each has co-planar rod supports instead of the traditional two dimples and spring configuration. Also, each of the concepts has a radius of curvature in two directions that allows for point support as shown in Figures 7 and 8.

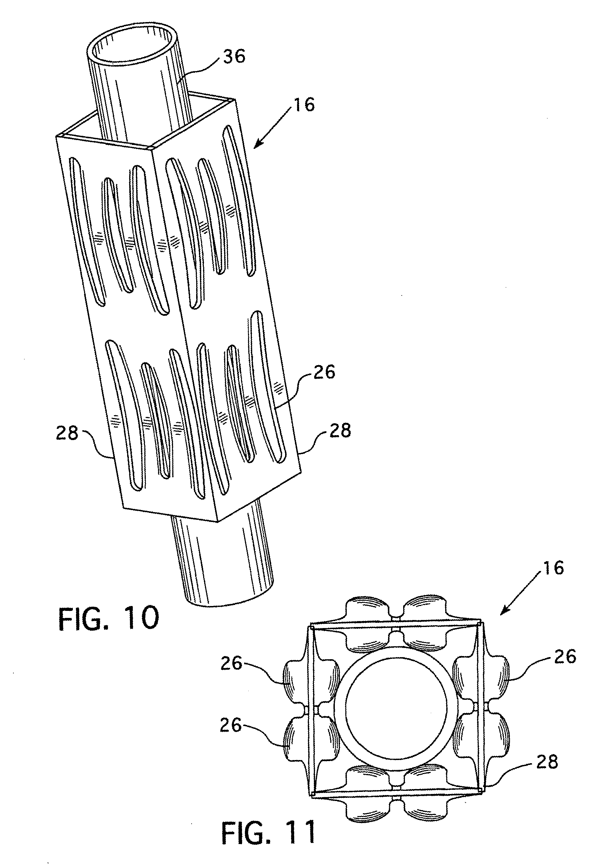

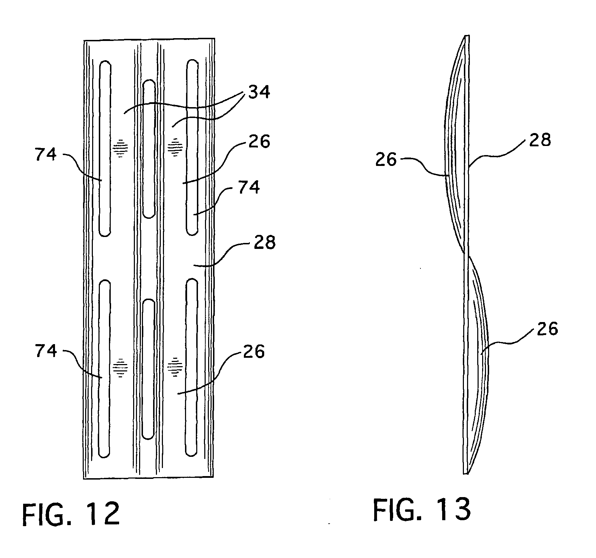

Figures 10-13 show a different variant of the same concept with the split spring 26 being integral to the base strap 12/14 in lieu of a separate spring being attached to the base strap as shown in Figures 3-9. Figure 10 provides a perspective view of one fuel rod support cell 16 with a fuel rod 36 supported therein. The co-planar split springs 26 extend into the cell 16 from the lower half of the cell walls 28 and reverse direction over the upper half of the cell wall to extend into adjacent fuel support cells 16. The split springs are connected to the grid wall 28 at the bottom of the wall, at a mid height location and at the top of the wall. A plan view of the embodiment illustrated in Figure 10 is provided in Figure 11 and a front view of one wall 28 is shown in Figure 12. The slots 74 serve to reduce the pressure drop and provide strain relief. A side view is illustrated in Figure 13 and clearly shows the split spring 26 extending into two adjacent fuel rod support cells 16. As in previous embodiments, the ligaments 34 have a radius of curvature in both directions. The embodiment shown in Figures 10-13 simplifies manufacture since there are fewer parts and provides less pressure drop since the design does not incorporate three thicknesses of material. This configuration also provides for eight coplanar points of contact between the grid and the fuel rod. With this configuration, the fuel rod support is maintained at different elevations on adjacent grid cells, which may help further reduce the pressure drop. However, this strap must be taller than the designs presented in Figures 3-9 since the height of the strap must accommodate both springs.

Figure 14 shows an alternate configuration which incorporates the split springs with a traditional "two dimples and a spring" concept. As in the other embodiments, the spring ligaments 34 are rounded in two directions to provide point support and the dimples may similarly be rounded to provide eight points of support though not coplanar.

The fuel rod support design of this invention provides a number of benefits over the traditional "two dimples and a spring" rod support systems. For example, the design of this invention provides a pivot point for the rod, which allows the rod to rotate during flow induced vibration instead of being rotationally constrained by the traditional "two dimple and a spring" configuration. This allows the rod to dissipate its energy, instead of the vibrational energy being resisted by the rotational resistance of the "two dimple and spring" configuration. Furthermore, the split down the middle of the cell effectively provides for two springs to support the rod on each side of the cell. This results in eight points of support of the rod in a given cell. This eight point contact rod support system will help to limit the effective grid cell size by limiting the amount that the rod can move in the orthogonal directions in the plane of the grid, which will provide for additional fretting margin. Further, the radius of curvature on the spring along the axis of the rod will preclude the fuel rod from impacting a hard edge, such as the edge of a conventional spring or dimple, thus increasing the fretting resistance of the design. Having two points of contact as well as a curved surface on the spring will result in fewer gall balls and lighter scratches on the fuel rod during rod loading. Dimple cocking has been an issue for some designs, and commonly wear scars indicate the dimple surface is not entirely flat. With the curved nature of the rod support feature of this invention, any worries of the support structure not be perpendicular to the rod are eliminated.

Using the base strap with the springs attached significantly simplifies the manufacturing process. Many of the conventional straps have very complex forming features. Straps with such a high percentage of the strap being formed tend to be difficult to maintain dimensional stability. With the design of this invention, both the base strap and the separate springs are simple formed features that can be easily manufactured and inspected. The manufacturing process can be even further simplified by a progressive dye stamping process where both the base strip material and the spring material are fed into the dye simultaneously and subsequently punched and welded as one continuous process. Use of the base strap provides additional crush strength of the grid for seismic/LOCA considerations. The thickness of the material for the separate springs can be optimized in order to achieve the desired spring stiffness. Furthermore, the concepts illustrated in Figures 4 and 5 provide a means to reduce the stiffness of the spring, thus also minimizing gall ball production and rod scratches during rod loading. The separate spring can be made from a material that has a different alloy, different grain direction or different processing (*i.e.,* an increased amount of cold work) in order to take advantage of the differential growth properties between the base strap and the spring. Differential growth is beneficial since it can be used to minimize the gap between the grid and fuel rod at high burnup. In the case of the embodiment shown in Figure 9, the spring stiffness is derived by a different mechanism than that of the other embodiments since the ligaments of the spring can rotate in order to provide movement of the rod contact surface resulting in a softer spring. In the case of the spring integral to the base strap (Figures 10-13), manufacturing is even further simplified since only one part is involved.

While specific embodiments of the invention have been described in detail, it will be appreciated by those skilled in the art that various modifications and alternatives to those details could be developed in light of the overall teachings of the disclosure. Accordingly, the particular embodiments disclosed are meant to be illustrative only and not limiting as to the scope of the invention which is to be given the breath of the appended claims.

**REFERENCE LIST**

| | | | |
|---|---|---|---|
| 10 | grids | 58 | control rods |
| 12 | grid straps | 60 | rod cluster control mechanism |
| 14 | orthogonal grid straps | 62 | drive rod hub |
| 16 | fuel rod cells | 64 | flukes |
| 18 | border strap | 66 | notches in base strap |
| 20 | guide tube cells | 68 | elongated slots in base Strap |
| 22 | springs | 70 | spring windows |
| 24 | dimples | 72 | lateral legs |
| 26 | split spring | 74 | outer slots in integral spring |
| 28 | cell wall | | |
| 30 | interleaved slits | | |
| 32 | resistance welds | | |
| 34 | spring ligaments | | |
| 36 | fuel rods | | |
| 38 | vertical spring slit | | |
| 40 | fuel assembly | | |
| 42 | bottom nozzle | | |
| 44 | guide tubes | | |
| 46 | instrument thimble | | |
| 48 | upper nozzle | | |
| 50 | fuel pellets | | |
| 52 | upper fuel rod end plug | | |
| 54 | lower fuel rod end plug | | |
| 56 | plenum spring | | |

## Claims

1. A nuclear fuel assembly grid comprising:
a first plurality of spaced, parallel, elongated straps (12)
a second plurality of spaced, parallel, elongated straps (14) positioned orthogonal to said first plurality of spaced, parallel, elongated straps (12) and aligned in a regular lattice pattern so that the intersection of each set of four adjacent straps (12, 14) defines a cell (16), some of which support fuel rods (36) with an extent of each of the first and second straps (12, 14) that border each cell (16) forming a wall of the cell;
wherein at least one wall (28) of the cells (16) that support fuel rods (36) has a vertically elongated spring that extends into the cell (16),
**characterized in that**
said vertically elongated spring (26) has a vertical slit (38) that separates a most extended portion of the spring into two vertically oriented ligaments (34) with a most extended portion of the ligaments (34) being rounded in two directions to provide two, coplanar, point contacts of support for a fuel rod (36).

2. The nuclear fuel assembly grid of Claim I wherein each wall (28) of the cell (16) that supports the fuel rod (36) includes the vertically elongated spring (26) at the same elevation to form eight coplanar point contacts of support for the fuel rod (36).

3. The nuclear fuel assembly grid of Claim 1 wherein the vertically elongated spring (26) is formed separate from the strap (12, 14) from which it extends and is attached to the wall (28) at an upper and lower vertical end portion of the spring (26).

4. The nuclear fuel assembly grid of Claim 1 wherein the vertically elongated spring (26) is formed separate from the strap (12, 14) from which it extends and the strap has an upper and lower opening in the wall (28) through which the spring (26) is attached to a second spring (26) extending in an opposite direction into an adjacent cell (16) that supports another fuel rod (36).

5. The nuclear fuel assembly grid of Claim 4 wherein the upper and lower openings in the wall (28) are vertical slots.

6. The nuclear fuel assembly grid of Claim 4 wherein the upper and lower openings in the wall (28) are notches in a top and bottom of the strap (12, 14)

7. The nuclear fuel assembly grid of Claim 1 wherein each of the ligaments (34) has a leg (72) that laterally extends towards each other with each leg (72) stopping short of contact with each other and extending slightly further into the cell (16) so that the point of contact with a fuel rod (36) passing through the corresponding cell (16) is made on the legs (72).

8. The nuclear fuel assembly grid of Claim 1 wherein a lower portion of the spring (26) that extends into the cell (16) is connected to the strap (12, 14) at approximately mid height of the wall (28) and then extends in the opposite direction into an adjacent cell (16).

9. The nuclear fuel assembly grid of Claim 1 wherein the vertical slit (38) does not extend to a top or bottom of the spring (26).

10. The nuclear fuel assembly grid of Claim 1 wherein an opposing wall (28) of the cell (16) that supports fuel rods (36), in which the spring (26) extends, has at least one dimple that extends into the cell (16) to oppose the spring (26).

11. A nuclear fuel assembly that has at least once spacer grid (10) as claimed in any of claims 1 to 10.

## Patentansprüche

1. Kembrennelementengitter mit:
einer ersten Mehrzahl beabstandeter paralleler länglicher Streifen (12),
einer zweiten Mehrzahl beabstandeter paralleler länglicher Streifen (14), die orthogonal zu der ersten Mehrzahl beabstandeter paralleler länglicher Streifen (12) positioniert und in einem regelmäßigen Gittermuster ausgerichtet sind, so dass der Schnittbereich jeder Gruppe von vier benachbarten Streifen (12, 14) eine Zelle (16) definiert, von denen einige Brennstäbe (36) abstützen, wobei ein Abschnitt jedes der ersten und zweiten Streifen (12, 14), die eine Zelle (16) begrenzen, eine Wand der Zelle bildet,
wobei mindestens eine Wand (28) der Zellen (16), die Brennstäbe (36) abstützen, eine vertikal längliche Feder aufweist, die in die Zelle (16) hineinragt, **dadurch gekennzeichnet, dass** die vertikal längliche Feder (26) einen vertikalen Schlitz (38) aufweist, der einen am weitesten vorspringenden Teil der Feder in zwei vertikal orientierte Bänder (34) unterteilt, wobei der am weitesten vorspringende Bereich der Bänder (34) in zwei Richtungen gerundet ist, um zwei coplanare Kontaktstellen zum Abstützen eines Brennstabs (36) bereitzustellen.

2. Kembrennelementengitter nach Anspruch 1, wobei jede Wand (28) der Zelle (16), die den Brennstab (36) abstützt, die vertikal längliche Feder (26) auf der gleichen Höhe hat, um acht coplanare Kontaktstellen zum Abstützen des Brennstabs (36) zu bilden.

3. Kernbrennelementengitter nach Anspruch 1, wobei die vertikal längliche Feder (26) von dem Streifen (12, 14), von welchem sie vorspringt, separat gebildet ist und an der Wand (28) mit einem oberen und einem unteren vertikalen Endteil der Feder (26) befestigt ist.

4. Kernbrennelementengitter nach Anspruch 1, wobei die vertikal längliche Feder (26) separat von dem Streifen (12, 14) gebildet ist, von welchem sie vorspringt, und der Streifen in der Wand (28) eine obere und eine untere Öffnung aufweist, durch welche die Feder (26) an einer zweiten Feder (26) befestigt ist, die in entgegengesetzter Richtung in eine benachbarte Zelle (16) vorspringt, die einen weiteren Brennstab (36) abstützt.

5. Kembrennelementengitter nach Anspruch 4, wobei die oberen und unteren Öffnungen in der Wand (28) vertikale Schlitze sind.

6. Kembrennelementengitter nach Anspruch 4, wobei die oberen und unteren Öffnungen in der Wand (28) Einschnitte im oberen und unteren Rand des Streifens (12, 14) sind.

7. Kembrennelementengitter nach Anspruch 1, wobei jedes der Bänder (34) einen Schenkel (72) aufweist, der seitwärts zueinander hin verläuft, wobei jeder Schenkel (72) kurz vor der Berührung mit dem anderen aufhört und geringfügig weiter in die Zelle (16) vorspringt, so dass die Berührungsstelle mit einem Brennstab (36), der durch die betreffende Zelle (16) hindurch verläuft, an den Schenkeln (72) stattfindet.

8. Kembrennelementengitter nach Anspruch 1, wobei ein unterer Teil der Feder (26), die in die Zelle (16) vorspringt, mit dem Streifen (12, 14) etwa in der Höhenmitte der Wand (28) verbunden ist und dann in der entgegengesetzten Richtung in eine benachbarte Zelle (16) hineinragt.

9. Kembrennelementengitter nach Anspruch 1, wobei der vertikale Schlitz (38) sich nicht bis zum oberen oder unteren Ende der Feder (26) erstreckt.

10. Kembrennelementengitter nach Anspruch 1, wobei eine gegenüberliegende Wand (28) der Zelle (16), die Brennstäbe (36) abstützt, in welche die Feder (26) vorspringt, mindestens einen Noppen aufweist, der entgegengesetzt der Feder (26) in die Zelle (16) vorspringt.

11. Kernbrennelement, das mindestens ein Abstandsgitter (10) nach einem der Ansprüche 1 bis 10 aufweist.

## Revendications

1. Grille d'assemblage combustible nucléaire, comprenant :
une première pluralité de sangles allongées parallèles espacées (12) ;
une deuxième pluralité de sangles allongées parallèles espacées (14) positionnées orthogonalement à ladite première pluralité de sangles allongées parallèles espacées (12) et alignées suivant un motif de réseau régulier de sorte que l'intersection de chaque ensemble de quatre sangles (12, 14) adjacentes définit une cellule (16), certaines desdites cellules supportant des barres de combustible (36), avec une étendue de chacune des première et seconde sangles (12, 14) qui bordent chaque cellule (16) formant une paroi de la cellule ;
dans laquelle au moins une paroi (28) des cellules (16) qui supportent des barres de combustible (36) possède un ressort verticalement allongé qui s'étend dans la cellule (16), **caractérisé en ce que** ledit ressort verticalement allongé (26) présente une fente verticale (38) qui sépare une portion plus étendue du ressort dans deux ligaments (34) orientés verticalement, avec une portion plus étendue des ligaments (34) étant arrondi dans deux directions pour fournir deux contacts ponctuels coplanaires de support pour une barre de combustible (36).

2. Grille d'assemblage combustible nucléaire selon la revendication 1, dans laquelle chaque paroi (28) de la cellule (16) supportant la barre de combustible (36) comprend le ressort verticalement allongé (26) à la même élévation, formant huit contacts ponctuels coplanaires de support pour la barre de combustible (36).

3. Grille d'assemblage combustible nucléaire selon la revendication 1, dans laquelle le ressort verticalement allongé (26) est formé de manière séparée de la sangle (12, 14) de laquelle il s'étend, et est fixé à la paroi (28) à une portion terminale verticale supérieure et inférieure du ressort (26).

4. Grille d'assemblage combustible nucléaire selon la revendication 1, dans laquelle le ressort verticalement allongé (26) est formé de manière séparée de la sangle (12, 14) de laquelle il s'étend, et la sangle présente une ouverture supérieure et inférieure dans la paroi (28) à travers lesquelles le ressort (26) est fixé à un autre ressort (26) s'étendant dans une direction opposée, dans une cellule (16) adjacente qui supporte une autre barre de combustible (36).

5. Grille d'assemblage combustible nucléaire selon la revendication 4, dans laquelle les ouvertures supérieure et inférieure dans la paroi (28) sont des fentes verticales.

6. Grille d'assemblage combustible nucléaire selon la revendication 4, dans laquelle les ouvertures supérieure et inférieure dans la paroi (28) sont des encoches dans un coté supérieur et inférieur de la sangle (12, 14).

7. Grille d'assemblage combustible nucléaire selon la revendication 1, dans laquelle chacun des ligaments (34) présente une branche (72), les branches s'étendant latéralement l'une vers l'autre, chaque branche (72) se terminant jusque avant de contacter l'autre, et s'étendant un peu plus loin dans la cellule (16), afin que le point de contact avec une barre de combustible (36) passant à travers la cellule (16) respective s'établit sur les branches (72).

8. Grille d'assemblage combustible nucléaire selon la revendication 1, dans laquelle une portion inférieure du ressort (26) s'étendant dans la cellule (16) est reliée à la sangle (12, 14), environ à mi-hauteur de la paroi (28), et puis s'étend dans la direction opposée dans une cellule (16) adjacente.

9. Grille d'assemblage combustible nucléaire selon la revendication 1, dans laquelle la fente verticale (38) ne s'étend pas jusqu'aux cotés supérieur et inférieur du ressort (26).

10. Grille d'assemblage combustible nucléaire selon la revendication 1, dans laquelle une paroi opposée (28) de la cellule (16) qui supporte des barres de combustibles (36) et dans laquelle le ressort (26) s'étend, présente au moins une bossette qui s'étend dans la cellule (16) afin de s'opposer au ressort (26).

11. Assemblage de combustible nucléaire comprenant au moins une grille-entretoise (10) selon l'une quelconque des revendications 1 à 10.
